(19) Europäisches Patentamt
European Patent Office
Office européen des brevets

(11) Veröffentlichungsnummer: **0 212 083**
**A1**

(12) # EUROPÄISCHE PATENTANMELDUNG

(21) Anmeldenummer: 86107032.4

(22) Anmeldetag: 23.05.86

(51) Int. Cl.⁴: **B27K 5/02**, B27K 3/52, C09D 15/00

(30) Priorität: 19.07.85 DE 3525818

(43) Veröffentlichungstag der Anmeldung: 04.03.87 Patentblatt 87/10

(84) Benannte Vertragsstaaten: AT BE CH DE FR GB IT LI NL

(71) Anmelder: Rütgerswerke Aktiengesellschaft
Mainzer Landstrasse 217
D-6000 Frankfurt a.Main 1(DE)

(72) Erfinder: Winnefeld, Winnfried
Poststrasse 10
D-8741 Nordheim/Rhön(DE)
Erfinder: Wolf, Dietrich, Dr.
Im Oberen Rech 7
D-6802 Ladenburg(DE)
Erfinder: Heller, Herbert
Rheinstrasse 3 c
D-6840 Lampertheim(DE)
Erfinder: Beez, Volker
Altrheinstrasse 1 a
D-6800 Mannheim-Waldhof(DE)

(54) **Verfahren zum Anfärben von Holz.**

(57) Mit Holzschutzsalzen, bevorzugt auf Chrom/Kupfer-Basis, imprägniertes Holz läßt sich leicht und witterungsbeständig färben, wenn es mit einer wäßrigen Lösung einer Dithiocarbamatverbindung behandelt wird.

EP 0 212 083 A1

## Verfahren zum Anfärben von Holz

Die Erfindung betrifft ein neues Verfahren zum Aufbringen einer licht-und wetterbeständigen Anfärbung auf Holz, das mit Holzschutzsalzen, insbesondere solchen auf Chrom/Kupfer-Basis imprägniert ist.

Es ist bekannt, die Imprägnierung von Holz mit Holzschutzmitteln auf Kupfer/Chrom-Basis und gegebenenfalls mit einem Zusatz von Fluoriden, Hexafluorosilikaten oder Borverbindungen durch Zusatz von wasserlöslichen Farbstoffen oder mittels Pigmentdispersionen, farbig zu gestalten.

Beide Möglichkeiten der farbigen Gestaltung haben gewisse Nachteile.

Bei den wasserlöslichen, organischen Farbstoffen ist dies eine begrenzte chemische Stabilität gegenüber der in der Holzschutzmittellösung vorliegenden Chromaten; d.h. der Farbstoff wird u.U. durch die Chromate zerstört. Ein weiterer Nachteil liegt in der geringen Lichtbeständigkeit dieser Farbstoffe und auch darin, daß sie beim Beregnen mehr oder weniger schnell ausgewaschen werden.

Bei der Anfärbung von Holz über pigmenthaltige Dispersionen ist zwar in der Regel eine gute Witterungsbeständigkeit und Lichtechtheit gegeben, hierbei treten aber folgende Nachteile auf:

In Abhängigkeit vom pH-Wert erfolgt ein mehr oder weniger schnelles Absitzen der Pigmente infolge Agglomeratbildung

Die Holzschutzmittellösungsaufnahme und die Eindringtiefe des Holzschutzmittels wird durch Verstopfen der Poren durch die Pigmente reduziert.

Es war daher Aufgabe der Erfindung, ein Verfahren zu entwickeln, bei dem die oben genannten Nachteile nicht auftreten und mit dem eine licht- und wetterbeständige Anfärbung auf Holz erzielt wird, das mit Holzschutzsalzen, insbesondere solchen auf Basis von Chrom und Kupfer imprägniert ist.

Die Lösung der Aufgabe erfolgt durch ein Verfahren gemäß der Ansprüche 1 - 4.

Es wurde gefunden, daß sich innerhalb von Sekunden eine Färbung auf dem Holz bildet, die weder im Licht verblaßt noch durch Regen ausgewaschen wird, wenn das mit Holzschutzsalzen imprägnierte Holz mit einer wäßrigen Lösung einer Dithiocarbamatverbindung behandelt wird.

Das Holz wird in üblicher Weise durch Streichen, Spritzen oder Tauchen oder im Vakuum/Kesseldruckverfahren mit einer üblichen Lösung eines Holzschutzsalzes, bevorzugt auf Chrom/Kupfer-Basis, imprägniert und nachdem die Holzschutzmittellösung oberflächlich abgetrocknet ist, in der Regel mindestens nach 1 Stunde, bevorzugt nach 24 -48 h, mit einer wäßrigen Lösung einer Dithiocarbamatverbindung in ebenfalls üblicher Weise durch Streichen, Spritzen oder Tauchen behandelt. Die Behandlung mit der Dithiocarbamatlösung kann auch zu einem späteren Zeitpunkt erfolgen, z.B. nachdem der Fixierungsprozeß vollständig abgeschlossen ist, also nach 4 -6 Wochen.

Holzschutzsalze auf Chrom/Kupfer-Basis sind alle fixierenden Holzschutzsalzmischungen, die Verbindungen des sechswertigen Chroms und ein Kupfersalz enthalten. Darüberhinaus dürfen diese Holzschutzsalzmischungen aber auch andere Wirkstoffe und Zusätze beinhalten. Die bekanntesten Beispiele hierfür sind die sog. CKB-Salze, die zusätzlich Borsäure enthalten und die sog. CFK-Salze, die zusätzlich eine Fluorverbindung oder ein Hexafluorosilikat enthalten.

Auch mit anderen Holzschutzsalzen, die chrom-und/oder kupferfrei sind, kann nach dem erfindungsgemäßen Verfahren Holz angefärbt werden, wenn diesen Salzen oder Salzmischungen geringe Mengen (0,5 bis etwa 5 Gew.-%) eines wasserlöslichen Schwermetallsalzes, wie z.B. eines Eisen-, Bismut-, Cobalt-, Nickel-, Mangan-, Kupfer- oder Zinnsalzes zugesetzt werden.

Erfindungsgemäß verwendbare Dithiocarbamatverbindungen sind alle wasserlöslichen Verbindungen der allgemeinen Formel

$$\left[R\left(\overset{\overset{S}{\|}}{C}-S^{\ominus}\right)_n\right]_m M^{o+}$$

wobei R eine Amino-, Methylamino-, Dimethylamino-, Ethylamino-, Diethylamino-, Propylamino-, Isopropylamino-, Dipropylamino-, Diisopropylamino-, Butylamino-, Dibutylamino-, Morpholino-, Piperidyl-, Pyrrolidinyl-oder Thiazin-Gruppe ist oder eine Piperazin-Gruppe, die gegebenenfalls auch an beiden Stickstoffatomen eine C-S-Gruppe trägt. Die Indices n, m und o sind gleich

oder verschieden und bedeuten 1 oder 2, wobei sich o durch Multiplikation von n und m ergibt. $M^{o+}$ bedeutet das oder die für den Ladungsausgleich notwendigen ein-oder zweiwertigen Metallionen oder Ammonium-oder Di-, Tri-oder Tetraalkylammoniumionen. Die Dithiocarbamate werden einzeln oder als Gemisch in Wasser gelöst, daß 0,1 bis 5%ige Lösungen, bevorzugt 1%ige Lösungen, entstehen. Mit diesen Lösungen werden die mit einer entsprechenden Salzlösung imprägnierten Hölzer behandelt und getrocknet. Bereits nach wenigen Sekunden entsteht eine dauerhafte Verfärbung. Beim Arbeiten mit niedriger Dithiocarbamatkonzentration (zum Zwecke einer schwachen Einfärbung) kann bei chromhaltigen Salzen durch die Fixierungsreaktion eine leichte Verschiebung der Farbnuance erfolgen. Die Verfärbung ist witterungsbeständig.

Beispiele

Imprägnierung

Fichtenholzklötzchen der Größe 10 x 5 x 2 cm werden 1 h lang in 10%ige Lösungen der folgenden Holzschutzsalzgemische getaucht:

| | |
|---|---|
| 1. CFK-Salz: | 35 % $Cu\,Si\,F_6 \cdot 6\,H_2O$ |
| | 65 % $(NH_4)_2\,Cr_2\,O_7$ |
| 2. CKB-Salz: | 35 % $Cu\,SO_4 \cdot 5\,H_2O$ |
| | 38 % $K_2\,Cr_2\,O_7$ |
| | 25 % $H_3\,BO_3$ |
| | 2 % $Na\,H\,SO_4$ |
| 3. CK-Salz | 49 % $Cu\,SO_4 \cdot 5\,H_2O$ |
| | 48 % $K_2\,Cr_2\,O_7$ |
| | 3 % $Cr\,O_3$ |
| 4. Silicofluorid | 99 % $Mg\,Si\,F_6 \cdot XH_2O$ |
| | 1 % $Ni\,Cl_2 \cdot 6\,H_2O$ |

Färbung

So imprägnierte Holzklötzchen werden 24 h bei Raumtemperatur getrocknet und danach in die folgenden Lösungen bzw. Dispersionen getaucht:

a.1%ige wäßrige Lösung von N,N-Dimethyldithiocarbamat, Na-Salz

b. 1%ige wäßrige Lösung von N,N-Diethyldithiocarbamat, Na-Salz

c. 1%ige wäßrige Lösung von N,N-Diethyldithiocarbamat, Diethylammoniumsalz

Die Tauchzeit beträgt 5 min.

Nach dem Abtrocknen an der Luft zeigt sich auf allen Proben mit den Salzmischungen 1 bis 3 eine einheitliche braune Anfärbung, auf den Proben mit der Salzmischung 4 eine einheitliche grüne Anfärbung. Die Ausbildung der maximalen Farbintensität ist nach 6 h erreicht.

Vergleichsproben

Mit den Holzschutzsalzgemischen imprägnierte und getrocknete Klötzchen werden entsprechend der Herstellungsangaben 1 h lang in

d. 10%ige wäßrige Lösung eines handelsüblichen Holzfarbstoffes

e. 10%ige handelsübliche Farbpigmentdispersion getaucht und anschließend an der Luft getrocknet, wobei sich eine einheitliche Anfärbung ausbildet.

Bewitterungstest

Alle Proben und Vergleichsproben werden 4 Wochen im Labor gelagert, so daß die Trocknung und Fixierung abgeschlossen ist.

Danach werden die Proben 6 Monate lange der Außenbewitterung ausgesetzt.

Ergebnis:

Während bei den Proben mit dem handelsüblichen wasserlöslichen Farbstoff praktisch keine Färbung mehr zu erkennen war und auch das mit Pigment behandelte Holz deutlich an Farbintensität verloren hatte, waren alle Proben, die mit Thiocarbamaten behandelt waren, unverändert farbintensiv.

## Ansprüche

1. Verfahren zum Anfärben von Holz, das mit Holzschutzsalzen imprägniert ist, **dadurch gekennzeichnet**, daß das imprägnierte Holz mit einer wäßrigen Lösung einer Dithiocarbamatverbindung behandelt wird.

2. Verfahren nach Anspruch 1, **dadurch gekennzeichnet**, daß das Holz zuvor mit Holzschutzsalzen auf Chrom/Kupfer-Basis imprägniert ist.

3. Verfahren nach Anspruch 1, **dadurch gekennzeichnet**, daß dem chrom-/kupferfreien Holzschutzsalz oder Holzschutzsalzgemisch 0,1 bis 5 Gew.-% eines wasserlöslichen Schwermetallsalzes aus der Gruppe der Eisen-, Bismut-, Cobalt-, Nickel-, Mangan-, Kupfer-oder Zinnsalze zugegeben werden.

4. Verfahren nach Anspruch 1 bis 3, **dadurch gekennzeichnet**, daß das imprägnierte Holz mit einer wäßrigen Lösung behandelt wird, die 0,1 bis 5 Gew.-% einer oder mehrerer Dithiocarbamatverbindungen enthält.

Europäisches Patentamt

# EUROPÄISCHER RECHERCHENBERICHT

Nummer der Anmeldung

EP 86 10 7032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DD-A- 118 224 (P. FRIESE) * Insgesamt * | 1,3,4 | B 27 K 5/02<br>B 27 K 3/52<br>C 09 D 15/00 |
| A | DE-A-3 105 642 (REMMERS CHEMIE) * Ansprüche; Seite 7, Zeile 13 - Seite 9, Zeile 7; Seite 12, Zeilen 1-19 * | 1-4 | |
| A | CHEMICAL ABSTRACTS, Band 101, Nr. 17, 22. Oktober 1984, Seite 254, Zusammenfassung Nr. 146117u, Columbus, Ohio, US; CS-A-213 521 (V. RATTAY et al.) 01-03-1984 * Insgesamt * | 1,3,4 | |
| A | US-A-4 313 976 (R.M. LEACH) * Spalte 3, Zeile 58 - Spalte 4, Zeile 68; Anspruch 1 * | 1-4 | **RECHERCHIERTE SACHGEBIETE (Int. Cl.4)**<br>B 27 K<br>C 09 D |
| A | CHEMICAL ABSTRACTS, Band 71, Nr. 21, 24. November 1969, Seite 243, Zusammenfassung Nr. 100819h, Columbus, Ohio, US; HU-A-156 253 (FAIPARI KUTATO INTEZET) 23-07-1969 * Insgesamt * | 1,3,4 | |

Der vorliegende Recherchenbericht wurde für alle Patentansprüche erstellt.

| Recherchenort | Abschlußdatum der Recherche | Prüfer |
|---|---|---|
| DEN HAAG | 21-10-1986 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82